# EUROPEAN PATENT APPLICATION

(11) **EP 4 827 242 A1**
(43) Date of publication of application: **21.10.2026**
(21) Application number: 25171200.6
(22) Date of filing: 17.04.2025
(51) Int. Cl.: H05B 47/115, H05B 47/19

(54) **A LIGHTING CONTROL SYSTEM AND A METHOD FOR CONTROLLING A LIGHTING SYSTEM**

(71) Applicant: Helvar Oy Ab, 02150 Espoo (FI)
(72) Inventor: JUSLÉN, Henri, 02150 Espoo (FI); HELLSTRÖM, Lars, 02150 Espoo (FI)
(74) Representative: Väänänen, Janne Kalervo

(57) **Abstract**

A lighting control system comprises at least one presence sensor (101a-101d), at least one wireless receiver (105a, 105b), and a controller (106). The presence sensor produces sensor data expressing presence of a living creature (107a-107d) on an area (103) at least partly illuminated by luminaires (109a-109f) controlled by the lighting control system, the wireless receiver (105a, 105b) receives device data sent by a self-moving device (108a-108d), and the controller (106) detects, based on the sensor data and the device data, situations in which the living creature and the self-moving device are, or will be, in the vicinity of each other and controls one or more of the luminaires to indicate such situations to warn the living creature that the self-moving device is, or will be, in the vicinity. Thus, the lighting control system can warn the living creature also when the presence sensor does not recognize the self-moving device.

## Description

### Field

The invention relates generally to facility management. More particularly, the invention relates to a lighting control "LC" system. Furthermore, the invention relates to a method and to a data processor program for controlling a lighting system. Furthermore, the invention relates to a lighting system.

### Background

The amount of self-moving devices in different areas is increasing. For example, cleaning robots, delivery robots, and/or self-driving logistic transporters can be doing their work in environments where people are working or otherwise present. It is very probable that, in the future, there will be increasingly more self-moving devices in human-occupied areas. Self-moving devices of the kind mentioned above may, however, constitute safety risks when the self-moving devices operate in areas occupied by humans and/or animals. The safety risks can be significant especially when a self-moving device moves fast and/or quietly and/or the self-moving device is heavy.

In the light of the above-mentioned, there is a need for technologies to decrease accidents and other negative effects and thereby speed up services provided by self-moving devices. The accidents and other negative effects can be decreased for example by making humans aware of risks and dangers related to, for example, situations in which humans and self-moving devices are in a same room or area as well as situations in which the humans and self-moving devices will be in a same room or area, e.g. a self-moving device is moving towards the room or area occupied by the humans, or a human is entering a room or area where one or more self-moving devices is/are operating. In some cases, a room or an area where self-moving devices are operating can be occupied by animals, e.g. a cowshed can be provided with delivery robots delivering feed to predetermined places at predetermined time, and there is a need to teach the animals to behave in a desired way in response operation of the self-moving devices.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying embodiments.

In accordance with the invention, a new lighting control system is provided. The lighting control system comprises:
- at least one presence sensor configured to produce sensor data expressing presence of one or more living creatures, i.e. humans and/or animals, on an area capable of being at least partly illuminated by luminaires controlled by the lighting control system,
- at least one wireless receiver configured to receive device data sent by one or more self-moving devices, and
- a controller communicatively connected to the presence sensor and to the wireless receiver, and configured to:
   - determine, based on the sensor data, where on the area the one or more one or more living creatures is/are,
   - determine, based on the device data, where on the area the one or more self-moving devices is/are, and
   - control one or more of the luminaires based on the sensor data and the device data to indicate, e.g. by changing brightness and/or color temperature and/or by blinking, at least one of the following situations: i) a situation in which at least one of the one or more living creatures and at least one of the one or more self-moving devices are on a same part of the area, and ii) a situation in which at least one of the one or more living creatures and at least one of the one or more self-moving devices will be on the same part of the area.

The above-described lighting control system makes the one or more living creatures aware of situations in which the one or more living creatures and the one or more self-moving devices are, or will, be in the vicinity of each other. As the lighting control system receives the device data, e.g. Bluetooth Low Energy "BLE" adverts, sent by the one or more self-moving devices, the lighting control system can warn the one or more living creatures also when the presence sensor does not detect the self-moving device. The presence sensor can be, for example, a passive infrared "PIR" sensor that cannot detect a self-moving device that does not generate enough heat.

In accordance with the invention, there is also provided a new lighting system that comprises:
- one or more luminaires, and
- a lighting control system according to the invention and configured to control at least the one or more luminaires.

In accordance with the invention, there is also provided a new method for controlling a lighting system. The method comprises:
- producing, with at least one presence sensor, sensor data expressing presence of one or more living creatures on an area capable of being at least partly illuminated by luminaires of the lighting system,
- receiving, with at least one wireless receiver, device data sent by one or more self-moving devices,
- determining, based on the sensor data, where on the area the one or more one or more living creatures is/are,
- determining, based on the device data, where on the area the one or more self-moving devices is/are, and
- controlling one or more of the luminaires based on the sensor data and the device data to indicate at least one of the following situations: i) a situation in which at least one of the one or more living creatures and at least one of the one or more self-moving devices are on a same part of the area, and ii) a situation in which at least one of the one or more living creatures and at least one of the one or more self-moving devices will be on the same part of the area.

Various embodiments of the invention can be put into practice as computer implemented invention "CII" embodiments. Therefore, in accordance with the invention, there is also provided a new data processor program for controlling a lighting system. The data processor program comprises data processor executable instructions for controlling a programmable data processor system to:
- receive, from at least one presence sensor, sensor data expressing presence of one or more living creatures on an area capable of being at least partly illuminated by luminaires of the lighting system,
- receive, from at least one wireless receiver, device data sent by one or more self-moving devices to the at least one wireless receiver,
- determine, based on the sensor data, where on the area the one or more one or more living creatures is/are,
- determine, based on the device data, where on the area the one or more self-moving devices is/are, and
- control one or more of the luminaires based on the sensor data and the device data to indicate at least one of the following situations: i) a situation in which at least one of the one or more living creatures and at least one of the one or more self-moving devices are on a same part of the area, and ii) a situation in which at least one of the one or more living creatures and at least one of the one or more self-moving devices will be on the same part of the area.

The above-mentioned data processor program can be called a computer program provided that a computer is understood in a broad sense so that e.g. a programmable controller or another programmable device is deemed to be a computer.

In accordance with the invention, there is also provided a new data processor program product. The data processor program product comprises a non-volatile data processor readable medium encoded with a data processor program according to the invention.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of also un-recited features.

Furthermore, it is to be understood that the use of "a" or "an", i.e. a singular form, throughout this document does not exclude a plurality.

The features recited in dependent claims are mutually freely combinable unless otherwise explicitly stated.

### Brief description of the figures

Exemplifying and non-limiting embodiments and their advantages are explained in greater detail below with reference to the accompanying drawings, in which:
Figure 1 illustrates a lighting system according to an exemplifying and non-limiting embodiment, and
Figure 3 shows a flowchart of a method according to an exemplifying and non-limiting embodiment for controlling a lighting system.

### Description of exemplifying and non-limiting embodiments

The specific examples provided in the description below should not be construed as limiting the scope and/or the applicability of the invention. Lists and groups of examples provided in the description below are not exhaustive unless otherwise explicitly stated.

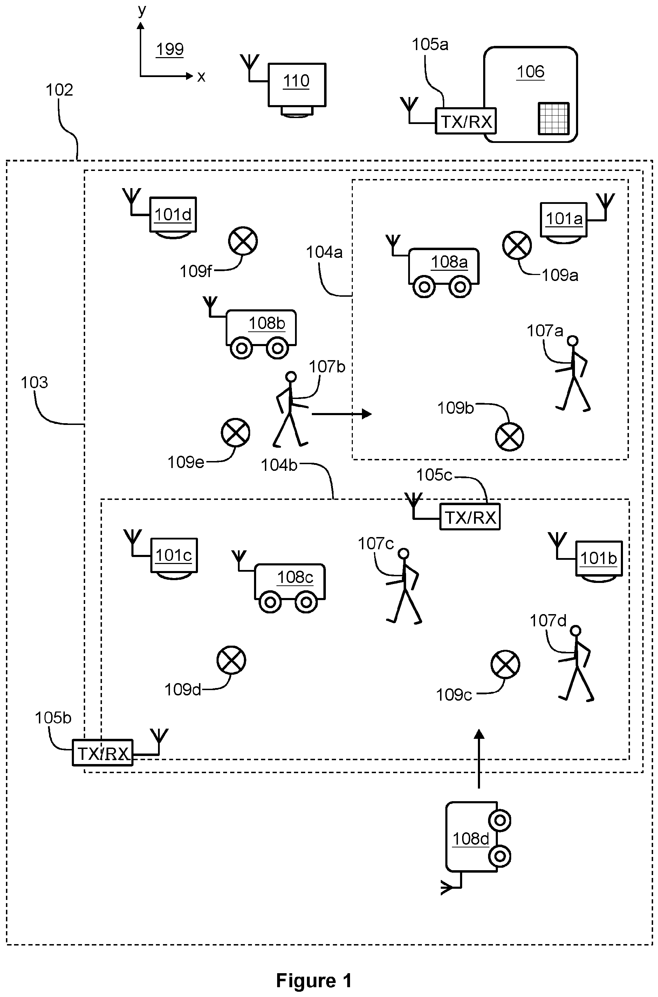

Figure 1 illustrates a lighting system according to an exemplifying and non-limiting embodiment. The lighting system comprises luminaires 109a, 109b, 109c, 109d, 109e, and 109f configured to illuminate a part 103 of an area 102. The lighting system comprises a lighting control system according to an exemplifying and non-limiting embodiment for controlling the lighting system and thereby the luminaires 109a-109f. Thus, the lighting control system is a part of the lighting system. Furthermore, one or more of the luminaires 109a-109f can be manually controllable with control means such as e.g. switches.

The lighting control system comprises presence sensors 101a, 101b, 101c, and 101d configured to produce sensor data expressing presence of living creatures 107a, 107b, 107c, and 107d on the area 102. In the exemplifying situation shown in figure 1, the living creatures 107a-107d are humans. The presence sensors 101a-101d may comprise, for example, passive infrared "PIR" sensors and/or other suitable sensor elements. The lighting control system comprises wireless receivers 105a, 105b, and 105c configured to receive device data, such as e.g. Bluetooth Low Energy "BLE" adverts, sent by self-moving devices 108a, 108b, 108c, and 108d. Each of the self-moving devices can be, for example, a cleaning robot, a delivery robot, or a self-driving logistic transporter.

The lighting control system comprises a controller 106 that is communicatively connected to the presence sensors 101a-101d and to the wireless receivers 105a-105c. The controller 106 can be communicatively connected to the presence sensors and the wireless receivers with radio links, with optical fibers, or with electric communication links. For example, the controller 106 can be communicatively connected to the presence sensors 101a-101d and to the wireless receivers 105a-105c via a corded data transfer system that uses the Digital Addressable Lighting Interface "DALI" technology. In principle, the DALI technology is applicable in conjunction with wireless data transfer technologies, too.

The controller 106 is configured to determine, based on the above-mentioned sensor data received from the presence sensors 101a-101d, where on the area 102 the living creatures 107a-107d are. The controller 106 is configured to determine, based on the device data received from the wireless receivers 105a and 105b, where on the area 102 the one or more self-moving devices 108a-108d are. The device data can be based on according to, for example, Bluetooth 6.0 that offers a feature that allows measuring distances with good accuracy. The locations of the self-moving devices 108a-108d can be determined, for example, by triangulation based on distances from the self-moving devices 108a-108d to the three wireless receivers 105a-105c whose locations on the area 102 are known.

The controller 106 is configured to control one or more of the luminaires 109a-109f based on the above-mentioned sensor data and device data to indicate at least one of following situations: i) a situation in which at least one of the living creatures 107a-107d and at least one of the self-moving devices 108a-108d are on a same part of the area 102, and ii) a situation in which at least one of the living creatures 107a-107d and at least one of the self-moving devices 108a-108d are will be on the same part of the area 102. Thus, the lighting control system makes appropriate one or ones of the living creatures 107a-107d aware of situations in which this living creature/these living creatures and the one or more self-moving devices 108a-108d are, or will be, in the vicinity of each other. As the lighting control system receives the device data sent by the self-moving devices 108a-108d, the lighting control system can warn the living creatures also when the presence sensors do not detect the self-moving devices. In an exemplifying and non-limiting embodiment, the controller 106 is configured control one or more of the luminaires 109a-109f to change brightness and/or color temperature and/or to blink in order to indicate the situations in which one or more living creatures and one or more self-moving devices are, or will be, in the vicinity of each other.

In a lighting control system according to an exemplifying and non-limiting embodiment, the controller 106 is configured to control one or more of the luminaires 109a-109f to change brightness and/or color temperature and/or to blink in response to a situation in which at least one living creature is entering a part of the area 102 occupied by one or more of the self-moving devices 108a-108d. A situation in which a living creature is entering a part of the area 102 can be detected e.g. by estimating a location and a propagation direction of the living creature based on estimates of temporally successive locations of the living creature. In an exemplifying and non-limiting embodiment, the controller 106 is configured to control each of the luminaires illuminating the whole part of the area to temporarily change brightness and/or color temperature and/or to blink when the living creature enters the part of the area, and thereafter to control one or more of the luminaires illuminating one or more places occupied by the one or more self-moving devices on the part of the area to increase the brightness and/or the color temperature to improve visibility of the one or more self-moving devices, i.e. to make it easier for the living creature to see and thereby notice the one or more self-moving devices. For example, in the exemplifying situation shown in figure 1, the controller 106 has assessed that the living creature 107b is approaching a part 104a of the area 102. Furthermore, the controller 106 has assessed that the self-moving device 108a is on the part 104a of the area 102. As a response to this situation, the controller 106 controls the luminaires 109a and 109b to change brightness and/or color temperature and/or to blink for a predetermined time to warn the living creature 107b. After the predetermined time has elapsed, the controller 106 may control the brightness and/or color temperature of the luminaire 109a to be higher to improve visibility of the self-moving device 108a, i.e. to make it easier for the living creature 107b to see and thereby notice the self-moving device 108a.

In a lighting control system according to an exemplifying and non-limiting embodiment, the controller 106 is configured to control one or more of the luminaires 109a-109f to change brightness and/or color temperature and/or to blink in response to a situation in which at least one of the self-moving devices 108a-108d is entering a part of the area 102 occupied by one or more of the living creatures 107a-107d. A situation in which a self-moving device is entering a part of the area 102 can be detected e.g. by estimating a location and a propagation direction of the self-moving device based on estimates of temporally successive locations of the self-moving device. In an exemplifying and non-limiting embodiment, the controller 106 is configured to control one or more luminaires illuminating a place occupied by the self-moving device to temporarily change brightness and/or color temperature and/or to blink when the self-moving device enters the part of the area 102, and thereafter to control one or more of the luminaires illuminating a place occupied by the self-moving device to increase the brightness and/or the color temperature to improve visibility of the self-moving device, i.e. to make it easier for a living creature to see and thereby notice the self-moving device. For example, in the exemplifying situation shown in figure 1, the controller 106 has assessed that the propagation direction of the self-moving device 108d is the positive y-direction of a coordinate system 199 and the self-moving device 108d is approaching a part 104b of the area 102. Furthermore, the controller 106 has assessed that the living creatures 107c and 107d are on the part 104b of the area 102. As a response to this situation, the controller 106 controls the luminaire 109c to temporarily change brightness and/or color temperature and/or to blink for a predetermined time to warn the living creatures 107a and 107b. After the predetermined time has elapsed, the controller 106 may control the brightness and/or color temperature of the luminaire 109c to be higher to improve visibility of the self-moving device 108d that has arrived at the part 104b of the area 102, i.e. to make it easier for the living creatures 107c and 107d to see and thereby notice the arrived self-moving device 108d.

In a lighting control system according to an exemplifying and non-limiting embodiment, the controller 106 is configured to determine, based on the device data, a location, a speed, and a propagation direction of a self-moving device, and to control each of the luminaires illuminating a place at which the self-moving device will enter a part of the area 102 to change brightness and/or color temperature and/or to blink a predetermined time prior to a time when the self-moving device enters the part of the area 102. The speed, e.g. in meters per second, can be estimated based on estimates of temporally successive locations of the self-moving device and time differences between these temporally successive locations. The time when the self-moving device enters the part of the area 102 can be estimated based on the speed estimate and an estimated location of the self-moving device. Thus, in this exemplifying and non-limiting embodiment, the lighting control system gives an advance-warning that a self-moving device will enter a part of the area 102. For example, in the exemplifying situation shown in figure 1, the controller 106 has assessed that the propagation direction of the self-moving device 108d is the positive y-direction of the coordinate system 199 and the self-moving device 108d is approaching a part 104b of the area 102 at a speed V so that the self-moving device 108d will enter the part 104 of the area 102 at an estimated time of arrival. Furthermore, the controller 106 has assessed that the self-moving device 108d will enter the part 104 of the area 102 at a place that is illuminated by the luminaire 109d. As a response to this situation, the controller 106 controls the luminaire 109c to change brightness and/or color temperature and/or to blink for the predetermined time prior to the estimated time of arrival of the self-moving device 108d. The advance warning related to a location at which a self-moving device will enter an area under consideration can be important especially in cases where the self-moving device is heavy and/or fast moving.

In a lighting control system according to an exemplifying and non-limiting embodiment, the controller 106 is configured to collect and maintain statistics of movements of the self-moving devices 108a-108d and to train, based on the statistics, an artificial intelligence "AI" system to predict the movements of the self-moving devices 108a-108d and control the luminaires 109a-109f proactively in accordance with the predicted movements of the self-moving devices 108a-108d. It is also possible that the controller 106 is configured to collect and maintain statistics of movements of the living creatures 107a-107d and to train, based on the statistics, an artificial intelligence "AI" system to recognize needs for services to be carried out by one or more of the self-moving devices 108a-108d, e.g. cleaning services carried out by cleaning robots on areas most frequently occupied by one or more of the living creatures 107a-107d. The controller 106 can be configured to communicate data expressing the above-mentioned needs to appropriate one or more of the self-moving devices 108a-108d and/or to a central controller of the self-moving devices.

A lighting control system according to an exemplifying and non-limiting embodiment comprises one or more monitoring sensors comprising a camera, a thermal camera, and/or a microphone communicatively connected to the controller 106, and the controller is configured to train, when the wireless receivers 105a-105c receive the device data, an artificial intelligence "AI" system to learn to recognize the self-moving devices 108a-108d based on one or more output signals of the one or more monitoring sensors without a need for the device data. Thus, the lighting control system learns to monitor self-moving devices which do not have means for transmitting respective device data. The exemplifying lighting control system illustrated in figure 1 comprises a monitoring sensor 110 than can be e.g. a camera whose field-of-view "FOV" covers the area 102.

The controller 106 can be implemented with one or more data processors each of which can be a programmable data processor provided with an appropriate software, a dedicated hardware data processor such as for example an application specific integrated circuit "ASIC", or a configurable hardware data processor such as for example a field programmable gate array "FPGA". Furthermore, the controller 106 may comprise one or more memory devices such as e.g. one or more random-access memory "RAM" circuits.

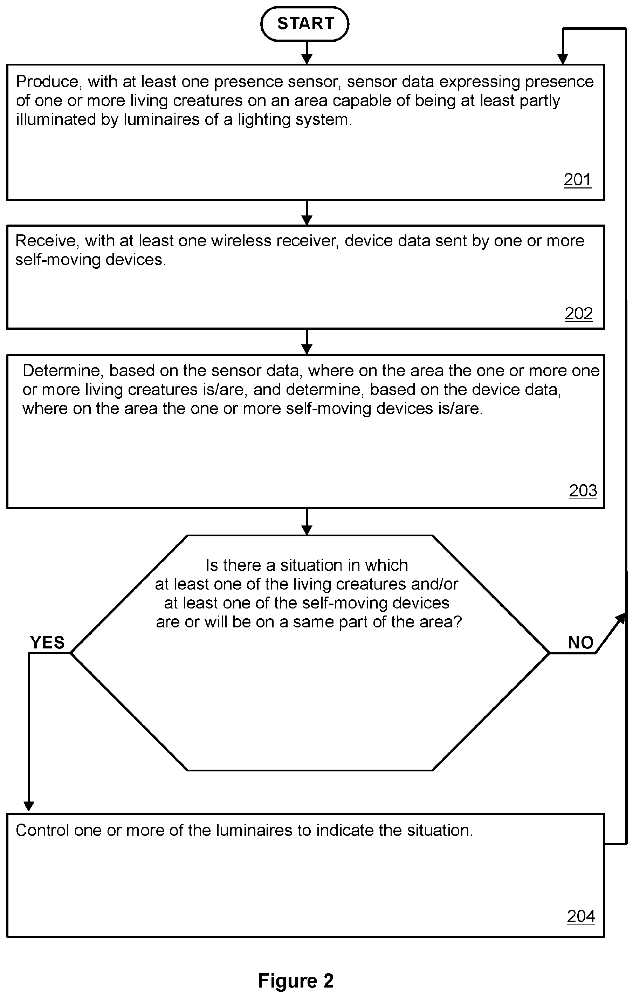

Figure 2 shows a flowchart of a method according to an exemplifying and non-limiting embodiment for controlling a lighting system. The method comprises the following actions:
- action 201: producing, with at least one presence sensor, sensor data expressing presence of one or more living creatures on an area capable of being at least partly illuminated by luminaires of the lighting system, and
- action 202: receiving, with at least one wireless receiver, device data sent by one or more self-moving devices,
- action 203: determining, based on the sensor data, where on the area the one or more one or more living creatures is/are, and determining, based on the device data, where on the area the one or more self-moving devices is/are, and
- action 204: controlling one or more of the luminaires based on the sensor data and the device data to indicate at least one of the following situations: i) a situation in which at least one of the one or more living creatures and at least one of the one or more self-moving devices are on a same part of the area, and ii) a situation in which at least one of the one or more living creatures and at least one of the one or more self-moving devices will be on the same part of the area.

A method according to an exemplifying and non-limiting embodiment comprises controlling the one or more luminaires to indicate the at least one of the above-mentioned situations so that the one or more luminaires is/are controlled to change brightness and/or color temperature and/or to blink.

A method according to an exemplifying and non-limiting embodiment comprises controlling one or more of the luminaires to change brightness and/or color temperature and/or to blink in response to a situation in which the at least one living creature is entering a part of the area occupied by the one or more self-moving devices. For example, each of the luminaires illuminating the part of the area can be controlled to temporarily change brightness and/or color temperature and/or to blink when the at least one living creature enters the part of the area, and thereafter one or more of the luminaires illuminating one or more places occupied by the one or more self-moving devices on the part of the area can be controlled to increase the brightness and/or the color temperature to improve visibility of the one or more self-moving devices, i.e. to make it easier for the at least one living creature to see and thereby notice the one or more self-moving devices.

A method according to an exemplifying and non-limiting embodiment comprises controlling one or more of the luminaires to change brightness and/or color temperature and/or to blink in response to a situation in which at least one of the one or more self-moving devices is entering a part of the area occupied by the one or more living creatures. For example, each of the luminaires illuminating a place at which the at least one self-moving device enters the part of the area can be controlled to temporarily change brightness and/or color temperature and/or to blink when the at least one self-moving device enters the part of the area, and thereafter each of the luminaires illuminating a place currently occupied by the at least one self-moving device can be controlled to increase the brightness and/or the color temperature to improve visibility of the at least one self-moving device, i.e. to make it easier for the one or more living creatures to see and thereby notice the at least one self-moving device.

A method according to an exemplifying and non-limiting embodiment comprises determining, based on the device data, a speed and a propagation direction of at least one of the self-moving devices, and to control each of the luminaires illuminating a place at which the at least one self-moving device will enter the part of the area to change brightness and/or color temperature and/or to blink a predetermined time prior to the at least one self-moving device enters the part of the area.

A method according to an exemplifying and non-limiting embodiment comprises collecting and maintaining statistics of movements of the one or more self-moving devices and training, based on the statistics, an artificial intelligence system to predict the movements of the one or more self-moving devices and control the luminaires proactively in accordance with the predicted movements of the one or more self-moving devices.

A method according to an exemplifying and non-limiting embodiment comprises receiving one or more signals from one or more monitoring sensors each comprising a camera, a thermal camera, and/or a microphone. The method further comprises training, when the wireless receiver receives the device data, an artificial intelligence system to follow the one or more self-moving devices based on the one or more signals received from the one or more monitoring sensors without a need for the device data. Thus, the artificial intelligence system learns to monitor self-moving devices which do not have means for transmitting respective device data.

A data processor program according to an exemplifying and non-limiting embodiment comprises data processor executable instructions for controlling a programmable data processor system to carry out actions related to a method according to any of the above-described exemplifying embodiments.

A data processor program according to an exemplifying and non-limiting embodiment comprises software modules for controlling a lighting system. The software modules comprise data processor executable instructions for controlling a programmable data processor system to:
- receive, from at least one presence sensor, sensor data expressing presence of one or more living creatures on an area capable of being at least partly illuminated by luminaires of the lighting system,
- receive, from at least one wireless receiver, device data sent by one or more self-moving devices to the at least one wireless receiver,
- determine, based on the sensor data, where on the area the one or more one or more living creatures is/are,
- determine, based on the device data, where on the area the one or more self-moving devices is/are, and
- control one or more of the luminaires based on the sensor data and the device data to indicate at least one of the following situations: i) a situation in which at least one of the one or more living creatures and at least one of the one or more self-moving devices are on a same part of the area, and ii) a situation in which at least one of the one or more living creatures and at least one of the one or more self-moving devices will be on the same part of the area.

The above-mentioned software modules can be e.g. subroutines or functions implemented with a programming language suitable for the programmable data processor system.

A data processor program product according to an exemplifying and non-limiting embodiment comprises a data processor readable medium encoded with a data processor program according to an embodiment of invention.

A non-transitory data processor readable medium according to an exemplifying and non-limiting embodiment is encoded with a data processor program according to an embodiment of invention.

A signal according to an exemplifying and non-limiting embodiment is encoded to carry information defining a data processor program according to an embodiment of invention.

The specific examples provided in the description given above should not be construed as limiting the scope and/or the applicability of the invention. Lists and groups of examples provided in the description given above are not exhaustive unless otherwise explicitly stated.

## Claims

1. A lighting control system comprising:
- at least one presence sensor (101a-101d) configured to produce sensor data expressing presence of one or more living creatures (107a-107d) on an area (102) capable of being at least partly illuminated by luminaires (109a-109f) controlled by the lighting control system, and
- at least one wireless receiver (105a, 105b) configured to receive device data sent by one or more self-moving devices (108a-108d),
**characterized in that** the lighting control system comprises a controller (106) communicatively connected to the presence sensor and to the wireless receiver, and configured to:
- determine, based on the sensor data, where on the area the one or more one or more living creatures is/are,
- determine, based on the device data, where on the area the one or more self-moving devices is/are, and
- control one or more of the luminaires based on the sensor data and the device data to indicate at least one of following situations: i) a situation in which at least one of the one or more living creatures and at least one of the one or more self-moving devices are on a same part (104a, 104b) of the area, and ii) a situation in which at least one of the one or more living creatures and at least one of the one or more self-moving devices will be on the same part of the area.

2. A lighting control system according to claim 1, wherein the controller is configured to control the one or more luminaires to indicate the at least one of the situations so that the one or more luminaires is/are controlled to change brightness and/or change color temperature and/or to blink.

3. A lighting control system according to claim 1 or 2, wherein the controller is configured to control one or more of the luminaires to change brightness and/or change color temperature and/or to blink in response to a situation in which the at least one living creature is entering the part of the area occupied by the one or more self-moving devices.

4. A lighting control system according to claim 3, wherein the controller is configured to control each of the luminaires illuminating the part of the area to temporarily change brightness and/or change color temperature and/or to blink when the at least one living creature enters the part of the area, and thereafter to control one or more of the luminaires illuminating one or more places occupied by the one or more self-moving devices on the part of the area to increase the brightness and/or the color temperature to improve visibility of the one or more self-moving devices and thereby to make it easier for the at least one living creature to see and notice the one or more self-moving devices.

5. A lighting control system according to any one of claims 1-4, wherein the controller is configured to control one or more of the luminaires to change brightness and/or change color temperature and/or to blink in response to a situation in which at least one of the one or more self-moving devices is entering the part of the area occupied by the one or more living creatures.

6. A lighting control system according to claim 5, wherein the controller is configured to control each of the luminaires illuminating a place at which the at least one self-moving device enters the part of the area to temporarily change brightness and/or change color temperature and/or to blink when the at least one self-moving device enters the part of the area, and thereafter to control each of the luminaires illuminating a place currently occupied by the at least one self-moving device to increase the brightness and/or the color temperature to improve visibility of the at least one self-moving device and thereby to make it easier for the one or more living creatures to see and notice the at least one self-moving device.

7. A lighting control system according to any one of claims 1-6, wherein the controller is configured to determine, based on the device data, a speed and a propagation direction of at least one of the one or more self-moving devices, and to control each of the luminaires illuminating a place at which the at least one self-moving device will enter the part of the area to change brightness and/or change color temperature and/or to blink a predetermined time prior to the at least one self-moving device enters the part of the area.

8. A lighting control system according to any one of claims 1-7, wherein the controller is configured to collect and maintain statistics of movements of the one or more self-moving devices and to train, based on the statistics, an artificial intelligence system to predict the movements of the one or more self-moving devices and control the luminaires proactively in accordance with predicted movements of the one or more self-moving devices.

9. A lighting control system according to any one of claims 1-8, wherein the lighting control system comprises one or more monitoring sensors (110) each comprising a camera, a thermal camera, and/or a microphone communicatively connected to the controller, and the controller is configured to train, when the wireless receiver receives the device data, an/the artificial intelligence system to follow the one or more self-moving devices based on one or more signals received from the one or more monitoring sensors without a need for the device data.

10. A lighting system comprising:
- one or more luminaires (109a-109f), and
- a lighting control system according to any one of claims 1-9 and configured to control at least the one or more luminaires.

11. A method for controlling a lighting system, the method comprising:
- producing (201), with at least one presence sensor, sensor data expressing presence of one or more living creatures on an area capable of being at least partly illuminated by luminaires of the lighting system, and
- receiving (202), with at least one wireless receiver, device data sent by one or more self-moving devices,
**characterized in that** the method comprises:
- determining (203), based on the sensor data, where on the area the one or more one or more living creatures is/are,
- determining (203), based on the device data, where on the area the one or more self-moving devices is/are, and
- controlling (204) one or more of the luminaires based on the sensor data and the device data to indicate at least one of following situations: i) a situation in which at least one of the one or more living creatures and at least one of the one or more self-moving devices are on a same part of the area, and ii) a situation in which at least one of the one or more living creatures and at least one of the one or more self-moving devices will be on the same part of the area.

12. A method according to claim 11, wherein the method comprises controlling the one or more luminaires to indicate the at least one of the situations so that the one or more luminaires is/are controlled to change brightness and/or change color temperature and/or to blink.

13. A method according to claim 11 or 12, wherein the method comprises controlling one or more of the luminaires to change brightness and/or change color temperature and/or to blink in response to i) a situation in which the at least one living creature is entering the part of the area occupied by the one or more self-moving devices, and/or ii) a situation in which at least one of the one or more self-moving devices is entering the part of the area occupied by at least one of the one or more living creatures.

14. A method according to any one of claims 11-13, wherein the method comprises determining, based on the device data, a speed and propagation direction of at least one of the self-moving devices, and to control each of the luminaires illuminating a place at which the at least one self-moving device will enter the part of the area to change brightness and/or change color temperature and/or to blink a predetermined time prior to the at least one self-moving device enters the part of the area.

15. A data processor program for controlling a lighting system, the data processor program comprising data processor executable instructions for controlling a programmable data processor system to:
- receive, from at least one presence sensor, sensor data expressing presence of one or more living creatures on an area capable of being at least partly illuminated by luminaires of the lighting system, and
- receive, from at least one wireless receiver, device data sent by one or more self-moving devices to the at least one wireless receiver,
**characterized in that** the data processor program comprises data processor executable instructions for controlling the programmable data processor system to:
- determine, based on the sensor data, where on the area the one or more one or more living creatures is/are,
- determine, based on the device data, where on the area the one or more self-moving devices is/are, and
- control one or more of the luminaires based on the sensor data and the device data to indicate at least one of following situations: i) a situation in which at least one of the one or more living creatures and at least one of the one or more self-moving devices are on a same part of the area, and ii) a situation in which at least one of the one or more living creatures and at least one of the one or more self-moving devices will be on the same part of the area.

## Amended claims

### Amended claims in accordance with Rule 137(2) EPC.

1. A lighting control system comprising:
- at least one presence sensor (101a-101d) configured to produce sensor data expressing presence of one or more living creatures (107a-107d) on an area (102) capable of being at least partly illuminated by luminaires (109a-109f) controlled by the lighting control system, and
- at least one wireless receiver (105a, 105b) configured to receive device data sent by one or more self-moving devices (108a-108d), the device data being indicative of location of each of the one or more self-moving devices,
wherein the lighting control system comprises a controller (106) communicatively connected to the presence sensor and to the wireless receiver, and configured to:
- determine, based on the sensor data, where on the area the one or more one or more living creatures is/are, and
- determine, based on the device data, where on the area the one or more self-moving devices is/are,
**characterized in that** the controller is configured to control one or more of the luminaires based on the sensor data and the device data to indicate at least one of following situations: i) a situation in which at least one of the one or more living creatures and at least one of the one or more self-moving devices are on a same part (104a, 104b) of the area, and ii) a situation in which at least one of the one or more living creatures and at least one of the one or more self-moving devices will be on the same part of the area.

2. A lighting control system according to claim 1, wherein the controller is configured to control the one or more luminaires to indicate the at least one of the situations so that the one or more luminaires is/are controlled to change brightness and/or change color temperature and/or to blink.

3. A lighting control system according to claim 1 or 2, wherein the controller is configured to control one or more of the luminaires to change brightness and/or change color temperature and/or to blink in response to a situation in which the at least one living creature is entering the part of the area occupied by the one or more self-moving devices.

4. A lighting control system according to claim 3, wherein the controller is configured to control each of the luminaires illuminating the part of the area to temporarily change brightness and/or change color temperature and/or to blink when the at least one living creature enters the part of the area, and thereafter to control one or more of the luminaires illuminating one or more places occupied by the one or more self-moving devices on the part of the area to increase the brightness and/or the color temperature to improve visibility of the one or more self-moving devices and thereby to make it easier for the at least one living creature to see and notice the one or more self-moving devices.

5. A lighting control system according to any one of claims 1-4, wherein the controller is configured to control one or more of the luminaires to change brightness and/or change color temperature and/or to blink in response to a situation in which at least one of the one or more self-moving devices is entering the part of the area occupied by the one or more living creatures.

6. A lighting control system according to claim 5, wherein the controller is configured to control each of the luminaires illuminating a place at which the at least one self-moving device enters the part of the area to temporarily change brightness and/or change color temperature and/or to blink when the at least one self-moving device enters the part of the area, and thereafter to control each of the luminaires illuminating a place currently occupied by the at least one self-moving device to increase the brightness and/or the color temperature to improve visibility of the at least one self-moving device and thereby to make it easier for the one or more living creatures to see and notice the at least one self-moving device.

7. A lighting control system according to any one of claims 1-6, wherein the controller is configured to determine, based on the device data, a speed and a propagation direction of at least one of the one or more self-moving devices, and to control each of the luminaires illuminating a place at which the at least one self-moving device will enter the part of the area to change brightness and/or change color temperature and/or to blink a predetermined time prior to the at least one self-moving device enters the part of the area.

8. A lighting control system according to any one of claims 1-7, wherein the controller is configured to collect and maintain statistics of movements of the one or more self-moving devices and to train, based on the statistics, an artificial intelligence system to predict the movements of the one or more self-moving devices and control the luminaires proactively in accordance with predicted movements of the one or more self-moving devices.

9. A lighting control system according to any one of claims 1-8, wherein the lighting control system comprises one or more monitoring sensors (110) each comprising a camera, a thermal camera, and/or a microphone communicatively connected to the controller, and the controller is configured to train, when the wireless receiver receives the device data, an/the artificial intelligence system to follow the one or more self-moving devices based on one or more signals received from the one or more monitoring sensors without a need for the device data.

10. A lighting system comprising:
- one or more luminaires (109a-109f), and
- a lighting control system according to any one of claims 1-9 and configured to control at least the one or more luminaires.

11. A method for controlling a lighting system, the method comprising:
- producing (201), with at least one presence sensor, sensor data expressing presence of one or more living creatures on an area capable of being at least partly illuminated by luminaires of the lighting system,
- receiving (202), with at least one wireless receiver, device data sent by one or more self-moving devices, the device data being indicative of location of each of the one or more self-moving devices,
- determining (203), based on the sensor data, where on the area the one or more one or more living creatures is/are, and
- determining (203), based on the device data, where on the area the one or more self-moving devices is/are,
**characterized in that** the method comprises:
- controlling (204) one or more of the luminaires based on the sensor data and the device data to indicate at least one of following situations: i) a situation in which at least one of the one or more living creatures and at least one of the one or more self-moving devices are on a same part of the area, and ii) a situation in which at least one of the one or more living creatures and at least one of the one or more self-moving devices will be on the same part of the area.

12. A method according to claim 11, wherein the method comprises controlling the one or more luminaires to indicate the at least one of the situations so that the one or more luminaires is/are controlled to change brightness and/or change color temperature and/or to blink.

13. A method according to claim 11 or 12, wherein the method comprises controlling one or more of the luminaires to change brightness and/or change color temperature and/or to blink in response to i) a situation in which the at least one living creature is entering the part of the area occupied by the one or more self-moving devices, and/or ii) a situation in which at least one of the one or more self-moving devices is entering the part of the area occupied by at least one of the one or more living creatures.

14. A method according to any one of claims 11-13, wherein the method comprises determining, based on the device data, a speed and propagation direction of at least one of the self-moving devices, and to control each of the luminaires illuminating a place at which the at least one self-moving device will enter the part of the area to change brightness and/or change color temperature and/or to blink a predetermined time prior to the at least one self-moving device enters the part of the area.

15. A data processor program for controlling a lighting system, the data processor program comprising data processor executable instructions for controlling a programmable data processor system to:
- receive, from at least one presence sensor, sensor data expressing presence of one or more living creatures on an area capable of being at least partly illuminated by luminaires of the lighting system,
- receive, from at least one wireless receiver, device data sent by one or more self-moving devices to the at least one wireless receiver, the device data being indicative of location of each of the one or more self-moving devices,
- determine, based on the sensor data, where on the area the one or more one or more living creatures is/are, and
- determine, based on the device data, where on the area the one or more self-moving devices is/are,
**characterized in that** the data processor program comprises data processor executable instructions for controlling the programmable data processor system to:
- control one or more of the luminaires based on the sensor data and the device data to indicate at least one of following situations: i) a situation in which at least one of the one or more living creatures and at least one of the one or more self-moving devices are on a same part of the area, and ii) a situation in which at least one of the one or more living creatures and at least one of the one or more self-moving devices will be on the same part of the area.
